# EUROPÄISCHE PATENTSCHRIFT

(11) **EP 0 579 846 B1**
(45) Veröffentlichungstag und Bekanntmachung des Hinweises auf die Patenterteilung: **23.08.1995**
(21) Anmeldenummer: 92112302.2
(22) Anmeldetag: 18.07.1992
(51) Int. Cl.: G01D 5/38

(54) **Optische Vorrichtung**
Optical device
Dispositif optique

(43) Veröffentlichungstag der Anmeldung: 26.01.1994
(73) Patentinhaber: Dr. Johannes Heidenhain GmbH, D-83292 Traunreut (DE)
(72) Erfinder: Michel, Dieter, Dipl.-Ing. (FH), W-8220 Traunstein (DE); Huber, Walter, Dipl.-Ing. (FH), W-8220 Traunstein (DE)

(56) Entgegenhaltungen:
- EP-A- 0 163 362
- FR-A- 2 075 408

## Beschreibung

Die Erfindung bezieht sich auf eine optische Vorrichtung nach dem Oberbegriff des Anspruches 1.

Insbesondere bezieht sich die Vorrichtung auf eine interferentiell arbeitende Positionsmeßeinrichtung mit hochauflösendem Dreigitter-System, bei dem relativ große Beugungswinkel auftreten.

Ein Dreigitter-Meßsystem ist aus der EP-A- 0 163 362 bekannt. Dort ist angeführt, daß die Fotodetektoren in der Brennebene einer Linse angeordnet sind. Die Anordnung der Fotodetektoren in einer Ebene hat aber den Nachteil, daß relativ großflächige Fotodetektoren erforderlich sind, um die gesamte Intensität der einzelnen Strahlenbündel auf die Fotodetektoren zu konzentrieren.

Bei Meßsystemen mit Teilungsperioden der Größenordnung (≦2»m) sind die Beugungswinkel der ±1.Ordnung größer als 26°, wodurch die Abbildung der gebeugten Strahlenbündel mit nur einer einzigen Linse in nur einer Ebene, nicht mehr möglich oder zumindest ungünstig wird.

Aus der FR-A-2 075 408 ist eine Positionsmeßeinrichtung bekannt, bei der in unterschiedliche Richtungen geneigte Strahlenbündel durch optisch abbildende Elemente auf zugeordnete Fotoelemente gerichtet werden.

Der Erfindung liegt die Aufgabe zugrunde, demgegenüber eine optische Vorrichtung zu schaffen, bei der die von einer Abbildungsoptik erfaßten Strahlenbündel definiert und vollständig mit kleinflächigen und somit schnellen Fotodetektoren erfaßt werden können, und daß Streulichtauswirkungen minimiert werden.

Diese Aufgabe wird durch eine optische Vorrichtung mit den Merkmalen des Anspruches 1 gelöst.

Besonders vorteilhafte Ausgestaltungen der Erfindung sind in den abhängigen Ansprüchen angegeben.

Die besonderen Vorteile der Erfindung bestehen darin, daß kleinflächige und somit sehr schnelle Fotodetektoren eingesetzt werden können, da die Zuordnung der Fotodetektoren zu den Strahlenbündeln und die Auswahl der optischen Elemente individuell erfolgt und deshalb optimiert werden kann.

Weiterhin werden von den Fotodetektoren die gesamten Strahlenbündel erfaßt, wodurch eine hohe Intensität der von den Fotodetektoren abgeleiteten Signale garantiert ist. Durch die Erfindung ist gewährleistet, daß auch die Randstrahlen der Strahlenbündel vollständig auf die Fotodetektoren treffen und somit auch der Abtastbereich des Maßstabgitters vollständig und gleichmäßig auf die Fotodetektoren abgebildet wird.

Mit Hilfe von Ausführungsbeispielen wird die Erfindung nachfolgend anhand der Zeichnungen näher erläutert. Es zeigt:
- Figur 1: stark schematisiert den Aufbau und Strahlengang einer Längenmeßeinrichtung die das Meßprinzip illustriert;
- Figur 2: ein Ausführungsbeispiel einer Längenmeßeinrichtung mit diffraktiver Abbildungsoptik und
- Figur 3: eine weitere Variante mit anderer Abbildungsoptik.

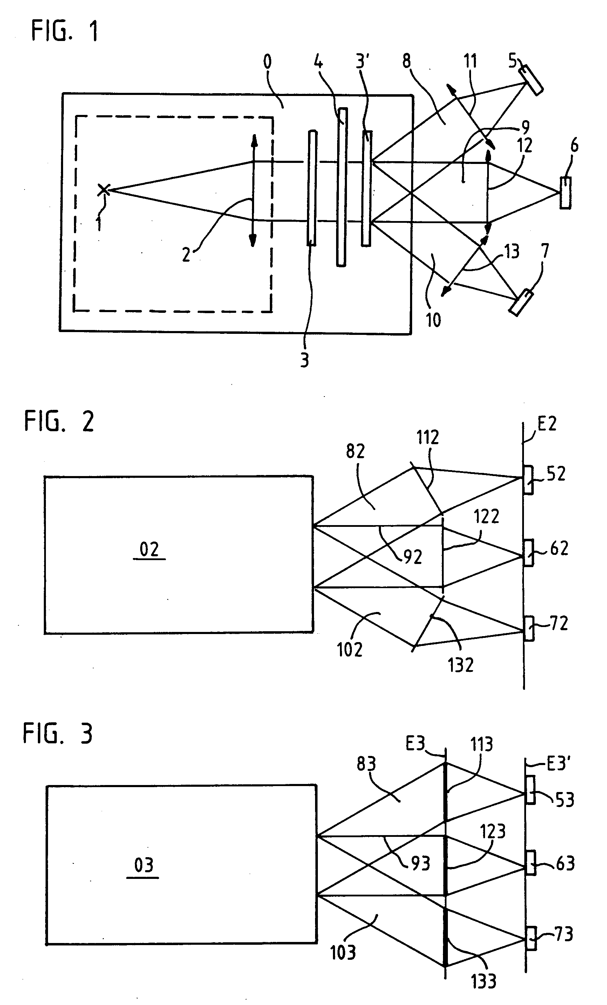

Die in Figur 1 gezeigte lichtelektrische Längenmeßeinrichtung 0 enthält eine Lichtquelle 1, eine Linse 2, eine Abtastplatte 3, 3' mit einem nicht dargestellten Gitter, ein Maßstabgitter 4 und drei Fotodetektoren 5, 6 und 7.

Der Strahlenverlauf wird nur kurz beschrieben, da er ausführlich in der EP-A- 0 163 362 erläutert ist. Danach wird das von der Lichtquelle 1 erzeugte und der Linse 2 kollimierte Licht beim Durchgang durch das Gitter der Abtastplatte 3 hauptsächlich in drei verschiedene Richtungen gebeugt. Diese gebeugten Teilstrahlenbündel 0. und +1. sowie -1. Beugungsordnung sind hier nicht gezeigt, da sie zum Verständnis der Erfindung an dieser Stelle nichts beitragen.

Am Maßstabgitter 4 werden die Teilstrahlenbündel ein weiteres Mal gebeugt.

Es entstehen nochmals gebeugte Teilstrahlenbündel, die durch das zur Abtastplatte 3,3' gehörige Gitter treten, dabei erneut gebeugt werden und zur Interferenz kommen. Die dadurch erzeugten weiteren gebeugten Teilstrahlenbündel 8, 9 und 10 weisen unterschiedliche Neigung auf.

Im Strahlengang jedes einzelnen Strahlenbündels 8, 9, 10 befindet sich ein optisches Element, welches auf den zugehörigen Strahlengang optimiert ist. In diesem Fall sind es drei Linsen 11, 12 und 13, die jeweils das zugeordnete Strahlenbündel 8, 9 und 10 auf den zugeordneten Fotodetektor 5, 6 und 7 fokussieren.

Die Eigenschaften der optischen Elemente und die Lage der zugeordneten Fotodetektoren lassen sich optimal aufeinander abstimmen, da ein optisches Element jeweils nur für ein Strahlenbündel ausgelegt sein muß.

In Figur 2 ist noch weiter schematisiert eine Dreigitter-Meßanordnung 02 gezeigt, bei der die räumlich getrennten Strahlenbündel 82, 92 und 102 von diffraktiven optischen Elementen DOEs 112, 122, 132 auf die zugehörigen Fotodetektoren 52, 62, 72 fokussiert werden. Bei entsprechender Auswahl dieser Elemente 112, 122, 132 können die Strahlenbündel unter beliebigen Winkeln einfallen, die zugehörigen Fotodetektoren jedoch in einer Ebene E2 liegen, was herstellungstechnische Vorteile bietet.

Wie Figur 3 zeigt, kann bei einer optischen Vorrichtung 03 der eingangs genannten Art durch die Auswahlmöglichkeit der optischen Elemente 113, 123, 133 deren Anordnung auch so gewählt werden, daß sowohl die optischen Elemente 113, 123, 133 als auch die zugehörigen Fotodetektoren 53, 63, 73 in Ebenen E3, E3' angeordnet sind, die zueinander parallel verlaufen.

## Patentansprüche

1. Optische Vorrichtung, insbesondere interferentiell arbeitende Positionsmeßeinrichtung mit einer Beleuchtungseinrichtung (1), bei der Intensitätsänderungen wenigstens zweier, aufgrund von Beugung an Gittern (3, 3', 4) in unterschiedliche Richtungen geneigter, Strahlenbündel (82, 83; 92, 93; 102, 103) von Fotodetektoren (52, 53; 62, 63; 72, 73) erfaßt werden, und bei der zur definierten Abbildung der Strahlenbündel auf die zugehörigen Fotodetektoren im Strahlengang jedes einzelnen der interferierenden, bereits räumlich getrennten Strahlenbündel wenigstens ein optisch abbildendes Element (112, 113; 122, 123; 132, 133) vorgesehen ist, dadurch gekennzeichnet, daß die optischen Elemente (112, 113; 122, 123; 132, 133) diffraktive optische Elemente und/oder Kombinationen von diffraktiven und refraktiven optischen Elementen sind.

2. Optische Vorrichtung nach Anspruch 1, dadurch gekennzeichnet, daß die Strahlenbündel (83, 93, 103) unter verschiedenen Winkeln in die optischen Elemente (113, 123, 133) einfallen.

3. Optische Vorrichtung nach Anspruch 1, dadurch gekennzeichnet, daß die optischen Elemente (113, 123, 133) und die zugeordneten Detektoren (53, 63, 73) in zwei parallelen Ebenen (E3, E3') angeordnet sind.

4. Optische Vorrichtung nach Anspruch 1, dadurch gekennzeichnet, daß die optische Vorrichtung ein sogenanntes Dreigitter-Meßsystem (0) ist.

5. Optische Vorrichtung nach Anspruch 4, dadurch gekennzeichnet, daß die Gitter (3, 3', 4) mit kollimiertem Licht beleuchtet werden.

6. Optische Vorrichtung nach Anspruch 4, dadurch gekennzeichnet, daß die Gitter (3, 3', 4) mit unkollimiertem Licht beleuchtet werden, und daß die Beugungsbilder der Lichtquelle (1) auf den Detektoren erzeugt werden.

## Claims

1. Optical device, in particular position measuring device working by interference with an illuminating device (1), with which changes in intensity of at least two beams of light (82, 83; 92, 93; 102, 103) inclined in different directions on account of diffraction at gratings (3, 3', 4) are captured by photodetectors (52, 53; 62, 63; 72, 73) and with Which for the defined imaging of the beams of light on to the associated photodetectors in the light path of each of the individual interfering, already spatially separate beams of light, at least one optically imaging element (112, 113; 122, 123; 132, 133) is provided, characterised in that the optical elements (112, 113; 122, 123; 132, 133) are diffractive optical elements and/or combinations of diffractive and refractive optical elements.

2. Optical device according to claim 1, characterised in that the beams of light (83, 93, 103) are incident on to the optical elements (113, 123, 133) at different angles.

3. Optical device according to claim 1, characterised in that the optical elements (113, 123, 133) and the associated detectors (53, 63, 73) are arranged in two parallel planes (E3, E3').

4. Optical device according to claim 1, characterised in that the optical device is a so-called three-grating measuring system (0).

5. Optical device according to claim 4, characterised in that the gratings (3, 3', 4) are illuminated with collimated light.

6. Optical device according to claim 4, characterised in that the gratings (3, 3', 4) are illuminated with uncollimated light, and that the diffraction patterns of the light source (1) are generated on the detectors.

## Revendications

1. Dispositif optique, en particulier dispositif de mesure de position à fonctionnement interférentiel, comprenant un dispositif d'éclairage (1), dans lequel les variations d'intensité d'au moins deux faisceaux de rayons (82,83;92,93;102,103) inclinés dans des directions différentes par diffraction sur des réseaux (3,3',4) sont détectées par des photodétecteurs (52,53;62,63;72,73) et dans lequel, en vue de la reproduction définie des faisceaux de rayons sur les photodétecteurs associés, au moins un élément (111,113;122,123;132,133) à effet de reproduction optique est disposé dans la marche des rayons de chacun des faisceaux de rayons à effet d'interférence, déjà séparés dans l'espace, caractérisé par le fait que les éléments optiques (112,113;122,123;132,133) sont des éléments optiques à diffraction et/ou des combinaisons d'éléments optiques à diffraction et à réfraction.

2. Dispositif optique suivant revendication 1, caractérisé par le fait que les faisceaux de rayons (83,93,103) tombent sous des angles différents dans les éléments optiques (113,123,133).

3. Dispositif optique suivant revendication 1, caractérisé par le fait que les éléments optiques (113,123,133) et les détecteurs associés (53,63,73) sont disposés dans deux plans parallèles (E3, E3').

4. Dispositif optique suivant revendication 1, caractérisé par le fait que le dispositif optique est un système de mesure dit à trois réseaux (0).

5. Dispositif optique suivant revendication 4, caractérisé par le fait que les réseaux (3,3',4) sont éclairés à l'aide de lumière collimatée.

6. Dispositif optique suivant revendication 4, caractérisé par le fait que les réseaux (3,3',4) sont éclairés à l'aide de lumière non collimatée et que les images de réfraction de la source lumineuse (1) sont produites sur les détecteurs.
